# EUROPÄISCHE PATENTSCHRIFT

(11) **EP 1 109 023 B1**
(45) Veröffentlichungstag und Bekanntmachung des Hinweises auf die Patenterteilung: **16.03.2005**
(21) Anmeldenummer: 00127356.4
(22) Anmeldetag: 13.12.2000
(51) Int. Cl.: G01P 3/48

(54) **Verfahren zur Bestimmung der Drehzahl einer Brennkraftmaschine**
Method for determining the rotational speed of a combustion engine
Procédé pour la détermination de la vitesse de rotation d'un moteur à combustion interne

(30) Priorität: 13.12.1999 DE 19959939
(43) Veröffentlichungstag der Anmeldung: 20.06.2001
(73) Patentinhaber: SIEMENS AKTIENGESELLSCHAFT, 80333 München (DE)
(72) Erfinder: Lindmüller, Peter, 76879 Essingen (DE); Ludwig, Michael, 76199 Karlsruhe (DE)

(56) Entgegenhaltungen:
- EP-A- 0 780 689
- DE-A- 19 713 181
- US-A- 4 015 262
- US-A- 4 878 185
- US-A- 4 896 102
- US-A- 5 424 636

## Beschreibung

Die Erfindung betrifft ein Verfahren zur Bestimmung der Drehzahl einer Brennkraftmaschine, die einen Generator antreibt, wobei aus einem von dem Generator erzeugten Signal ein dem Wechselspannungsanteil der vom Generator erzeugten Spannung entsprechender erster, höherfrequenterer Signalanteil und ein durch die Verbrennungen in den einzelnen Zylindern der Brennkraftmaschine hervorgerufener zweiter, niederfrequenterer Signalanteil ermittelt werden, aus dem Verhältnis der Frequenzen beider Signalanteile ein Proportionalitätsfaktor gebildet wird und im weiteren die Drehzahl aus dem ersten Signalanteil und dem Proportionalitätsfaktor bestimmt wird.

Ein derartiges, aus der EP 0 408 877 Bl bekanntes Verfahren ermöglicht es, aus der Bordnetzspannung eines Kraftfahrzeuges unmittelbar die Motordrehzahl zu bestimmen. Speziell bei Dieselmotoren besteht nämlich das Problem, daß im Unterschied zu fremdgezündeten Brennkraftmaschinen keine Zündimpulse zur Verfügung stehen, aus denen die Drehzahl bestimmt werden könnte. Der Wechselspannungsanteil der vom Generator erzeugten Spannung ist zwar proportional zur Drehzahl des antreibenden Motors, jedoch ist der durch das Übersetzungsverhältnis zwischen Motor und Generator und die Polpaarzahl des Generators bedingte Proportionalitätsfaktor unbekannt. Bei dem bekannten Verfahren wird ausgenutzt, daß insbesondere bei Leerlauf des Motors die sich in einem unrunden Motorlauf äußernden Beschleunigungen der Kolben aufgrund der explosionsartigen Verbrennungen in den einzelnen Zylindern des Motors einen zweiten, niederfrequenteren Signalanteil in der von dem Generator erzeugten Spannung hervorrufen, dessen Frequenz von den Übersetzungsverhältnis und der Polpaarzahl unabhängig ist und daher bei bekannter Zylinderzahl unmittelbar der Motordrehzahl entspricht. Der unbekannte Proportionalitätsfaktor wird daher bei Leerlauf des Motors als das Verhältnis der Frequenz dieses zweiten Signalanteils zu der Frequenz des dem Wechselspannungsanteil der von dem Generator erzeugten Spannung entsprechenden ersten Signalanteils gebildet, um im weiteren bei höheren Motordrehzahlen und rundem Motorlauf die Drehzahl aus der Frequenz des Wechselspannungsanteils in Verbindung mit dem Proportionalitätsfaktor zu bestimmen.

Bei dem bekannten Verfahren wird davon ausgegangen, daß der erste, höherfrequentere Signalanteil mit dem zweiten, niederfrequenteren Signalanteil frequenzmoduliert ist, weswegen die Frequenzermittlung durch FM-Demodulation erfolgt. Von Nachteil ist dabei die Schmalbandigkeit der FM-Demodulation, während angesichts der Breite des Drehzahlbereichs eine Breitbandigkeit bei der Frequenzermittlung gefordert ist.

Aus der EP O 780 689 A1 und der DE 197 13 181 A1 ist es bekannt, das Signal mit dem höherfrequenteren und dem niederfrequenteren Signalanteil zunächst einer analogen Bandpaßfilterung zu unterziehen, bevor durch Fouriertransformation bzw. ein Schätzverfahren die Frequenzen der Signalanteile bestimmt werden.

Bei einem aus der US 4 896 102 bekannten Verfahren zur Frequenzanalyse wird das digitalisierte Signal einer digitalen Bandpaßfilterung unterzogen, bevor durch Fouriertransformation das Signalspektrum ermittelt wird.

Die US 5 424 636 offenbart eine zweifache Fouriertransformation eines analog bandpaßgefilterten und anschließend digitalisierten Signals.

Gemäß der Erfindung wird eine angesichts der Breite des Drehzahlbereichs einer Brennkraftmaschine breitbandige Frequenzermittlung dadurch erreicht, daß bei dem Verfahren der eingangs angegebenen Art die Frequenz des ersten, höherfrequenteren Signalanteils durch digitale Hochpaßfilterung des Signals mit anschließender Fouriertransformation ermittelt wird und daß die Frequenz des zweiten, niederfrequenteren Signalanteils durch digitale Tiefpaßfilterung des Signals mit anschließender Frequenzbestimmung ermittelt wird. Die Frequenzbestimmung des niederfrequenteren Signalanteils nach seiner Tiefpaßfilterung kann auf unterschiedliche Weise, z. B. ebenfalls durch Fouriertransformation, erfolgen.

Die Erfindung geht dabei von einer additiven Überlagerung der beiden unterschiedlichen Signalanteile mit ihren zu ermittelnden Frequenzen aus, was dadurch bedingt ist, daß die Beschleunigungen der Kolben aufgrund der explosionsartigen Verbrennungen in den einzelnen Zylindern zu einer Amplitudenmodulation des dem Wechselspannungsanteil der von dem Generator erzeugten Spannung entsprechenden ersten Signalanteils führen. Durch die Hochpaßfilterung des Signals des Generators mit anschließender Fouriertransformation wird die Frequenz der höherfrequenteren Signalanteile breitbandig ermittelt.

Die Hochpaßfilterung des Signals erfolgt in besonders einfacher und effektiver Weise dadurch, daß das Signal zur digitalen Hochpaßfilterung mit Hilfe einer vorgegebenen Anzahl von aufeinanderfolgenden Zeitfenstern in eine entsprechende Anzahl von Signalverlaufsabschnitten unterteilt wird, die aus den in den jeweiligen Zeitfenstern enthaltenen Signalwerten bestehen, daß anschließend die einzelnen Signalverlaufsabschnitte derart gegeneinander verschoben werden, daß zu einem vorgegebenen Zeitpunkt innerhalb jedes Zeitfensters ein vorgegebenes Signalverlaufskriterium für alle Signalverlaufsabschnitte gleich ist, und daß die verschobenen Signalverlaufsabschnitte durch additive Überlagerung gemittelt werden. Mit der Verschiebung der Signalverlaufsabschnitte wird verhindert, daß sich einzelne Signalverlaufsabschnitte aus unterschiedlichen Zeitfenstern gegenphasig und somit destruktiv überlagern.

Als Signalverlaufskriterium wird vorzugsweise das Vorzeichen des Signalverlaufs zu einem vorgegebenen Zeitpunkt innerhalb des Zeitfensters, insbesondere in der Mitte des Zeitfensters, herangezogen. Die Verschiebung erfolgt dann in der Weise, daß alle anschließend durch additive Überlagerung zu mittelnde Signalverlaufsabschnitte zu dem vorgegebenen Zeitpunkt innerhalb des jeweiligen Zeitfensters eine einheitliche, beispielsweise positive, Steigung aufweisen. Das Vorzeichen des Signalverlaufs zu einem vorgegebenen Zeitpunkt innerhalb des Zeitfensters ist ein besonders einfach zu erfassendes Signalverlaufskriterium. Darüber hinaus sind aber auch weitere Signalverlaufskriterien denkbar, beispielsweise ob der Signalverlauf zu einem vorgegebenen Zeitpunkt innerhalb des Zeitfensters einen Schwellenwert, z. B. den Signalmittelwert, über- oder unterschreitet.

Die Verschiebung kann entsprechend dem zeitlichen Abstand der Signalwerte in unterschiedlichen Schrittweiten erfolgen, wobei im einfachsten Fall eine Schrittweite ausreicht, die einer viertel Periode des als periodisch anzusehenden Signalverlaufs nach vorne oder zurück entspricht, so daß in diesem Fall die Schrittweite insgesamt einer halben Periode entspricht und so in vorteilhafter Weise durch eine Invertierung des entsprechenden Signalverlaufsabschnittes realisiert werden kann.
Zur weiteren Erläuterung der Erfindung wird im folgenden auf die Figuren der Zeichnung bezug genommen; im einzelnen zeigen
- Figur 1: ein Ausführungsbeispiel einer zur Durchführung des erfindungsgemäßen Verfahrens geeigneten Einrichtung in Form eines vereinfachten Blockschaltbildes,
- Figur 2: ein Beispiel für das von dem Generator erzeugten und zur Drehzahlbestimmung herangezogenen Signals und
- Figur 3: ein Beispiel für die digitale Hochpaßfilterung des Signals durch Mittelung von in aufeinanderfolgenden Zeitfenstern enthaltenen und im Sinne eines einheitlichen Signalverlaufskriteriums zueinander verschobenen Signalverlaufsabschnitten.

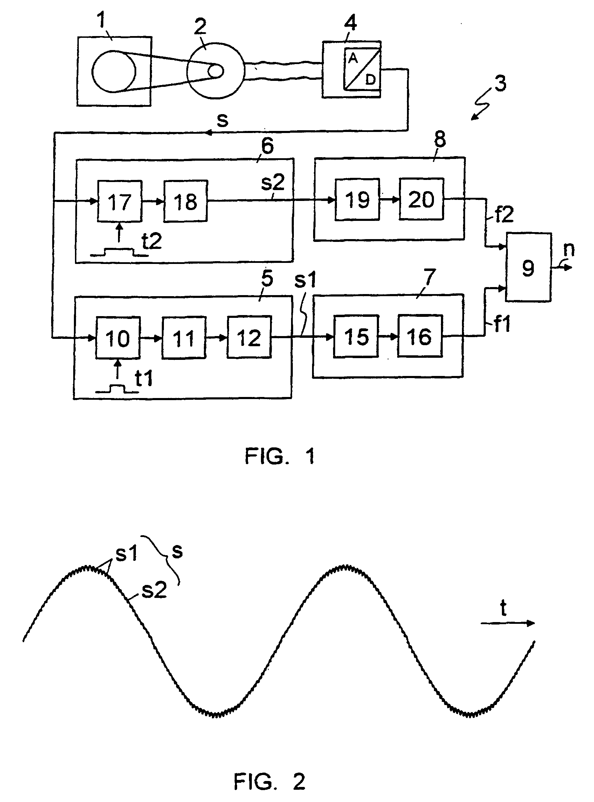

Figur 1 zeigt eine Brennkraftmaschine l, hier ein Dieselmotor eines Kraftfahrzeugs, die einen Generator 2, hier eine Lichtmaschine, zur Energieversorgung des elektrischen Bordnetzes des Kraftfahrzeugs antreibt. Ein von dem Generator 2 erzeugtes Signal s, hier die Bordnetzspannung, alternativ aber auch beispielsweise das äußere Magnetfeld des Generators 2, wird einer Einrichtung 3 zur Bestimmung der Drehzahl n der Brennkraftmaschine 1 zugeführt.

Wie Figur 2 zeigt, enthält das Signal s einen ersten, höherfrequenteren Signalanteil s1, der dem Wechselspannungsanteil (ripple) der von dem Generator 2 erzeugten Spannung entspricht und dessen Frequenz f1 zu der Drehzahl n der Brennkraftmaschine l, dem Übersetzungsverhältnis zwischen Brennkraftmaschine 1 und Generator 2 und der Polpaarzahl des Generators 2 proportional ist. Ein zweiter, niederfrequenterer Signalanteil s2, der sich insbesondere im Leerlauf der Brennkraftmaschine 1 bemerkbar macht, wird durch die explosionsartigen Verbrennungen in den einzelnen Zylindern der Brennkraftmaschine 1 und den sich daraus ergebenden Beschleunigungen der Kolben verursacht. Die Frequenz f2 dieses zweiten Signalanteils s2 ist von dem Übersetzungsverhältnis zwischen Brennkraftmaschine 1 und Generator 2 und der Polpaarzahl des Generators 2 unabhängig und entspricht somit bei bekannter Zylinderzahl unmittelbar der Drehzahl n der Brennkraftmaschine 1. Aufgrund der Beschleunigungen der Kolben der Brennkraftmaschine 1 ist der niederfrequentere Signalanteil s2 in Form einer Amplitudenmodulation additiv dem höherfrequenteren Signalanteil s1 überlagert.

Wie Figur 1 zeigt, wird das von dem Generator 2 erzeugte Signal s in einer Signalerfassungseinheit 4 der Einrichtung 3 erfaßt, ggf. verstärkt und digitalisiert. Das digitalisierte Signal s wird anschließend einem digitalen Hochpaßfilter 5 zur Bereitstellung des ersten, höherfrequenteren Signalanteils s1 sowie einem digitalen Tiefpaßfilter 6 zur Bereitstellung des zweiten, niederfrequenteren Signalanteils s2 zugeführt. In Einrichtungen 7 bzw. 8 zur Frequenzbestimmung werden durch Fast-Fourier-Transformation (FFT) die Frequenzen f1 bzw. f2 der Signalanteile s1 und s2 ermittelt, die anschliessend einer die Drehzahl n der Brennkraftmaschine 1 ermittelnden Recheneinheit 9 zugeführt werden. Bei niedriger Drehzahl und unrundem Lauf der Brennkraftmaschine 1, insbesondere bei Leerlaufdrehzahl n0, wird in der Recheneinheit 9 aus der Frequenz f2 und der bekannten Zylinderzahl z der Brennkraftmaschine 1 die Drehzahl n0 mit n0 = z · f2 bestimmt. Außerdem wird das Übersetzungsverhältnis zwischen der Brennkraftmaschine 1 und dem Generator 2 einschließlich der Polpaarzahl des Generators 2 mit ü = f2/f1 ermittelt. Im weiteren wird die Drehzahl n nur noch aus der Frequenz f1 mit n = ü · z · f1 bestimmt.

Das digitale Hochpaßfilter 5 enthält eine Zeitfenster-Einheit 10, in der mit Hilfe von aufeinanderfolgenden Zeitfenstern der Breite t1 der Verlauf des Signals s in eine vorgegebene Anzahl von m Signalverlaufsabschnitte unterteilt wird, die aus den in den jeweiligen Zeitfenstern enthaltenen Signalwerten bestehen. Wie im folgenden noch näher erläutert wird, werden die so gebildeten Signalverlaufsabschnitte in einer Einheit 11 im Sinne eines für alle Signalverlaufsabschnitte einheitlichen Signalverlaufskriteriums gegeneinander verschoben und anschließend in einer Einheit 12 durch additive Überlagerung unter Bildung des ersten, höherfrequenteren Signalanteils s1 gemittelt.

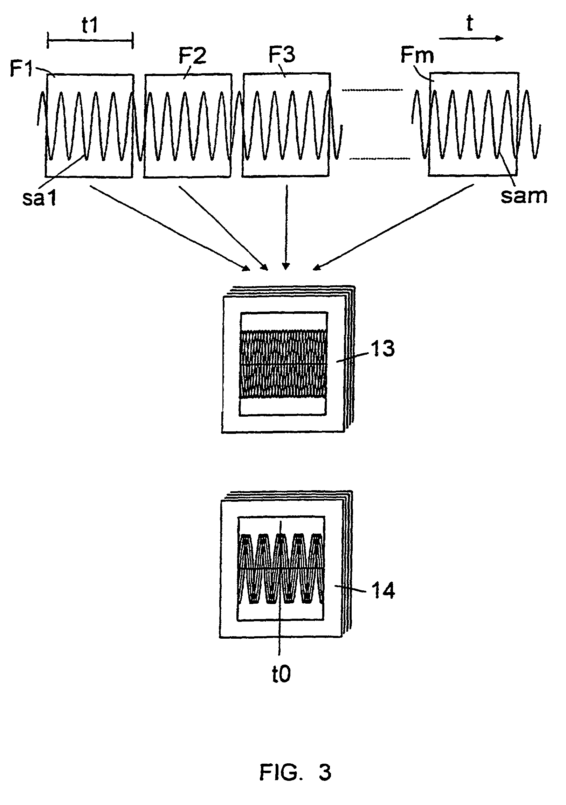

Figur 3 zeigt beispielhaft die aufeinanderfolgenden Zeitfenster F1 bis Fm mit den darin enthaltenen Signalverlaufsabschnitten Sal bis sam. Werden, wie am Beispiel eines Funktionsblocks 13 gezeigt, die einzelnen Signalverlaufsabschnitte sal bis sam ohne weiteres überlagert, so kommt es aufgrund der statistischen Streung insgesamt zu einer gegenseitigen Auslöschung aller Signalverlaufsabschnitte bei der Mittelung. Der Funktionsblock 14 verdeutlicht im Unterschied dazu die Verschiebung der Signalverlaufsabschnitte sal bis sam im Sinne der Einhaltung eines für alle Signalverlaufsabschnitte einheitlichen Signalverlaufskriteriums. Bei dem gezeigten Beispiel besteht das Signalverlaufskriterium aus der positiven Steigung des Signalverlaufs zu einem vorgegebenen Zeitpunkt t0 der hier von der Mitte der jeweiligen Zeitfenster Fl bis Fm gebildet wird. Wenn einer der Signalverlaufsabschnitte sal bis sam zu diesem Zeitpunkt t0 eine negative Steigung aufweist, so wird der betreffende Signalverlaufsabschnitt soweit verschoben, daß sich zu dem Zeitpunkt t0 eine positive Steigung ergibt. Dabei wird die Verschiebung in vereinfachter Weise durch eine Invertierung des entsprechenden Signalverlaufsabschnittes realisiert, so daß sie bei einem als periodisch angesehenen Signalverlauf einer halben Periode entspricht. Bei der anschließenden Mittelung durch additive Überlagerung der verschobenen Signalverlaufsabschnitte sal bis sam ergibt sich somit eine Ungenauigkeit von +/- einer Viertelperiode.

In einer Einheit 16 wird anschließend das Amplitudenmaximum in dem Frequenzspektrum und damit die gesuchte Frequenz f1 ermittelt. Das Amplitudenmaximum wird dabei durch Interpolaktion zwischen den diskreten Werten des Frequenzspektrums ermittelt; aufgrund der verwendeten zeitlich begrenzten Signalverlaufsabschnitte sal bis sam des Signals s ist nämlich das Frequenzspektrum nicht kontinuierlich.

Zur Ermittlung der Frequenz f2 des niederfrequenteren Signalanteils s2 in dem Signal s wird in einer Zeitfenster-Einheit 17 des digitalen Tiefpaßfilters 6 mittels eines Zeitfensters der Breite t2 ein Signalverlaufsabschnitt des Signals s gebildet. Durch digitale Tiefpaßfilterung in einer Einheit 18 wird anschließend der niederfrequentere Signalanteil s2 erhalten, aus dem in nachfolgenden Einheiten 19 und 20 in der für die Einheiten 15 und 16 beschriebenen Weise durch Fast-Fourier-Transformation und Interpolation die Frequenz f2 ermittelt wird.

## Patentansprüche

1. Verfahren zur Bestimmung der Drehzahl (n) einer Brennkraftmaschine (1), die einen Generator (2) antreibt, wobei aus einem von dem Generator (2) erzeugten Signal (s) ein dem Wechselspannungsanteil der von dem Generator (2) erzeugten Spannung entsprechender erster, höherfrequenterer Signalanteil (s1) und ein durch die Verbrennungen in den einzelnen Zylindern der Brennkraftmaschine (1) hervorgerufener zweiter, niederfrequenterer Signalanteil (s2) ermittelt werden, aus dem Verhältnis der Frequenzen (fl, f2) beider Signalanteile (s1, s2) ein Proportionalitätsfaktor (ü) gebildet wird und im weiteren die Drehzahl (n) aus dem ersten Signalanteil (s1) und dem Proportionalitätsfaktor (ü) bestimmt wird, **dadurch gekennzeichnet, daß** die Frequenz (f1) des ersten, höherfrequenteren Signalanteils (s1) durch digitale Hochpaßfilterung des Signals (s) mit anschließender Fouriertransformation ermittelt wird und daß die Frequenz (f2) des zweiten, niederfrequenteren Signalanteils durch digitale Tiefpaßfilterung des Signals (s) mit anschließender Frequenzbestimmung ermittelt wird.

2. Verfahren nach Anspruch 1, **dadurch gekennzeichnet, daß** das Signal (s) zur digitalen Hochpaßfilterung mit Hilfe einer vorgegebenen Anzahl von aufeinanderfolgenden Zeitfenstern (F1 ... Fm) in eine entsprechende Anzahl von Signalverlaufsabschnitten (sa1 ... sam) unterteilt wird, die aus den in den jeweiligen Zeitfenstern (F1 ... Fm) enthaltenen Signalwerten bestehen, daß anschließend die einzelnen Signalverlaufsabschnitte (sa1 ... sam) derart gegeneinander verschoben werden, daß zu einem vorgegebenen Zeitpunkt (t0) innerhalb jedes Zeitfensters (F1 ... Fm) ein vorgegebenes Signalverlaufskriterium für alle Signalverlaufsabschnitte (sa1 ... sam) gleich ist, und daß die verschobenen Signalverlaufsabschnitte (sa1 ... sam) durch additive Überlagerung gemittelt werden.

3. Verfahren nach Anspruch 2, **dadurch gekennzeichnet, daß** als Signalverlaufskriterium das Vorzeichen der Steigung des Signalverlaufs zu einem vorgegebenen Zeitpunkt (t0) innerhalb des Zeitfensters (F1 ... Fm) herangezogen wird.

4. Verfahren nach Anspruch 2 oder 3, **dadurch gekennzeichnet, daß** zur Verschiebung eines Signalverlaufsabschnittes (sa1 ... sam) dieser invertiert wird.

## Claims

1. Method for determination of the rotation speed (n) of an internal combustion engine (1) which drives a generator (2), with a first signal component (s1) which is at a higher frequency and corresponds to the AC voltage component of the voltage produced by the generator (2), and a second signal component (s2) which is at a lower frequency and is caused by the combustion processes in the individual cylinders of the internal combustion engine (1), being determined from a signal (s) which is produced by the generator (2), a proportionality factor (ü) being formed from the ratio of the frequencies (f1, f2) of the two signal components (s1, s2), and the rotation speed (n) then being determined from the first signal component (s1) and the proportionality factor (ü), **characterized in that** the frequency (f1) of the first signal component (s1), which is at a higher frequency, is determined by digital high-pass filtering of the signal (s) with subsequent Fourier transformation, and **in that** the frequency (f2) of the second signal component, which is at a lower frequency, is determined by digital low-pass filtering of the signal (s) with subsequent frequency determination.

2. Method according to Claim 1, **characterized in that**, for digital high-pass filtering by means of a predetermined number of successive time windows (F1 ... Fm), the signal (s) is subdivided into a corresponding number of signal profile sections (sa1 ... sam) which comprise the signal values contained in the respective time windows (F1 ... Fm), **in that** the individual signal profile sections (sa1 ... sam) are then shifted with respect to one another such that a predetermined signal profile criterion is the same for all the signal profile sections (sa1 ... sam) at a predetermined time (t0) within each time window (F1 ... Fm), and **in that** the shifted signal profile sections (sa1 ... sam) are averaged by additive superimposition.

3. Method according to Claim 2, **characterized in that** the mathematical sign of the gradient of the signal profile at a predetermined time (t0) within the time window (F1 ... Fm) is used as the signal profile criterion.

4. Method according to Claim 2 or 3, **characterized in that** a signal profile section (sa1 ... sam) is inverted in order to shift it.

## Revendications

1. Procédé pour déterminer la vitesse de rotation (n) d'un moteur à combustion interne (1) qui entraîne un générateur (2), d'après lequel à partir d'un signal (s) engendré par le générateur (2), on détermine une première composante de signal (s1) de fréquence plus élevée, correspondant à la part de tension alternative de la tension produite par le générateur (2), et une seconde composante de signal (s2) de fréquence plus basse, produite par les combustions dans les cylindres individuels du moteur à combustion interne (1), puis l'on forme à partir du rapport des fréquences (f1, f2) des deux composantes de signal (s1, s2), un facteur de proportionnalité (ü), et l'on détermine par la suite la vitesse de rotation (n) à partir de la première composante de signal (s1) et du facteur de proportionnalité (ü),
**caractérisé en ce que** la fréquence (f1) de la première composante de signal (s1) de fréquence plus élevée, est déterminée par filtrage numérique du type filtre passe-haut du signal (s) suivi d'une transformation de Fourier, et **en ce que** la fréquence (f2) de la seconde composante de signal (s2) de fréquence plus basse, est déterminée par filtrage numérique du type filtre passe-bas du signal (s), suivi de la détermination de fréquence.

2. Procédé selon la revendication 1, **caractérisé en ce que** l'on subdivise le signal (s), pour le filtrage numérique du type filtre passe-haut, à l'aide d'un nombre prédéterminé de fenêtres de temps (F1 ... Fm), en un nombre correspondant de secteurs de variation de signal (sa1 ... sam), qui sont formés par les valeurs du signal contenues dans les fenêtres de temps (F1 ... Fm) respectives, **en ce que** l'on décale ensuite les secteurs de variation de signal (sa1 ... sam) individuels les uns par rapport aux autres de façon à ce qu'à un instant (t0) prescrit à l'intérieur de chaque fenêtre de temps (F1 ... Fm), un critère de variation de signal prescrit soit identique pour tous les secteurs de variation de signal (sa1 ... sam), et **en ce que** l'on forme une moyenne des secteurs de variation de signal (sa1 ... sam) décalés, par superposition additive.

3. Procédé selon la revendication 2, **caractérisé en ce qu'**en guise de critère de variation de signal, on utilise le signe de la pente de la variation de signal à un instant (t0) prescrit à l'intérieur de la fenêtre de temps (F1 ... Fm).

4. Procédé selon la revendication 2 ou 3, **caractérisé en ce que** pour le décalage d'un secteur de variation de signal (sa1 ...sam), on inverse celui-ci.
